# EUROPEAN PATENT SPECIFICATION

(11) **EP 1 686 663 B1**
(45) Date of publication and mention of the grant of the patent: **27.03.2013**
(21) Application number: 06001994.0
(22) Date of filing: 31.01.2006
(51) Int. Cl.: H01R 13/658

(54) **Electric connector having a receiving portion for receiving plying force when the connector is coupled to a mating connector**
Elektrischer Verbinder mit einem Teill zur Aufnahme von Biegekräften während der Kupplung mit Gegenverbindern
Connecteur électrique ayant un élément de reception de forces de flexion pendant l' accouplement à un connecteur complémentaire

(30) Priority: 01.02.2005 JP 2005025696
(43) Date of publication of application: 02.08.2006
(73) Proprietor: Japan Aviation Electronics Industry, Limited, Shibuya-ku Tokyo (JP); Sharp Kabushiki Kaisha, Osaka-shi Osaka (JP)
(72) Inventor: Takeda, Shinpei, 1-chome, Shibuya-ku, Tokyo (JP); Ootani, Hideyuki, 1-chome, Shibuya-ku, Tokyo (JP); Okuzako, Kazutaka, Higashihiroshima-shi, Hiroshima (JP)
(74) Representative: Feldmeier, Jürgen

(56) References cited:
- EP-A- 0 793 303
- US-A- 5 326 282

## Description

This application claims priority to prior Japanese patent application JP 2005-25696, the disclosure of which is incorporated herein by reference.

### Background of the Invention:

This invention relates to an electric connector having a shell to be fitted to a mating connector.

An electric connector having a conductive shell to be fitted to a mating conductive shell of a mating connector is known. Each of these shells is a pressed part formed by press-punching and bending a thin metal plate, and has a cylindrical shell fitting portion. The shell fitting portions are contacted and fitted to each other to be electrically connected (for example, see Japanese Unexamined Patent Application Publication No. H09-259981).

When the electric connector is fitted to the mating connector, i.e., when the shell fitting portions are contacted and fitted to each other, it is supposed that strong prying force is applied to the electric connector to expand the shell fitting portion of the electric connector by the principle of the lever. More particularly, since the prying force is received by the shell fitting portions alone, the shell fitting portions may possibly be deformed.

US 5,326,282 discloses a miniature multiple electrical connector which consists of a plug connector and a receptacle connector having an insulating block and a metal shell. The metal shell is fixed to the insulating block by fitting anchoring protrusions provided along both sides of the insulating block in anchoring apertures of fixing tongues provided on the metal shell. When the plug connector is being inserted into the receptacle connector, the metal shell of the receptacle connector is likely to be deformed by a metal shell of the plug connector. In order to prevent such a deformation of the metal shell, there is provided means for anchoring the center of the metal shell weakest in mechanical strength to the insulating block or means for preventing application of a force to the center of the metal shell when the plug connector is being inserted into the receptacle connector.

### Summary of the Invention:

It is therefore an object of this invention to provide an electric connector which is effectively prevented from being deformed when the electric connector is fitted to a mating connector.

Other object of the present invention will become clear as the description proceeds.

The object is attained by an electric connector according to claim 1. Further developments of the invention are specified in the dependent claims, respectively.

### Brief Description of the Drawing:

Fig. 1 is a perspective view of an electric connector according to a first embodiment of this invention;
Fig. 2 is a front view of the electric connector illustrated in Fig. 1;
Fig. 3 is an enlarged sectional view taken along a line III-III in Fig. 2;
Fig. 4 is a right side view of the electric connector illustrated in Fig. 1;
Fig. 5 is a plan view of the electric connector illustrated in Fig. 1;
Fig. 6 is a bottom view of the electric connector illustrated in Fig. 1;
Fig. 7 is an enlarged view of a characteristic part in Fig. 1;
Fig. 8 is an enlarged view of a characteristic part in Fig. 2;
Fig. 9 is a perspective view of an electric connector according to a second embodiment of this invention;
Fig. 10 is a front view of the electric connector illustrated in Fig. 9;
Fig. 11 is an enlarged sectional view taken along a line XI-XI in Fig. 10;
Fig. 12 is a right side view of the electric connector illustrated in Fig. 9;
Fig. 13 is a plan view of the electric connector illustrated in Fig. 9;
Fig. 14 is a bottom view of the electric connector illustrated in Fig. 9;
Fig. 15 is an enlarged view of a characteristic part in Fig. 9;
Fig. 16 is an enlarged view of a characteristic part in Fig. 10;
Fig. 17 is a perspective view of an electric connector according to a third embodiment of this invention;
Fig. 18 is a front view of the electric connector illustrated in Fig. 17;
Fig. 19 is a sectional view taken along a line XIX-XIX in Fig. 18;
Fig. 20 is a right side view of the electric connector illustrated in Fig. 17;
Fig. 21 is a plan view of the electric connector illustrated in Fig. 17;
Fig. 22 is a bottom view of the electric connector illustrated in Fig. 17;
Fig. 23 is an enlarged view of a characteristic part in Fig. 17; and
Fig. 24 is an enlarged view of a characteristic part in Fig. 18.

### Description of the Preferred Embodiments:

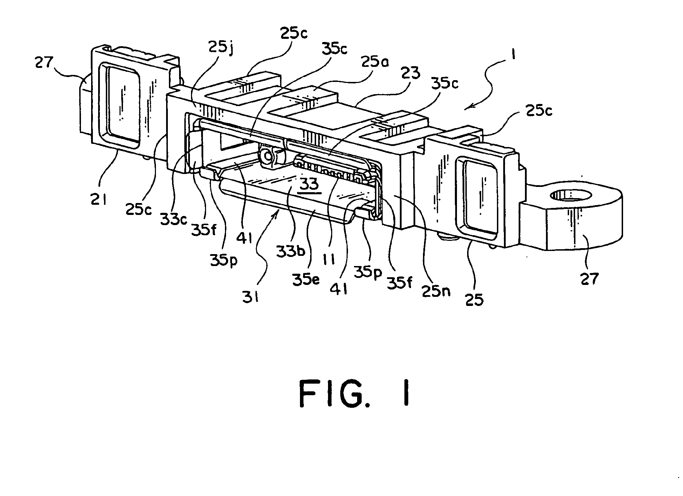

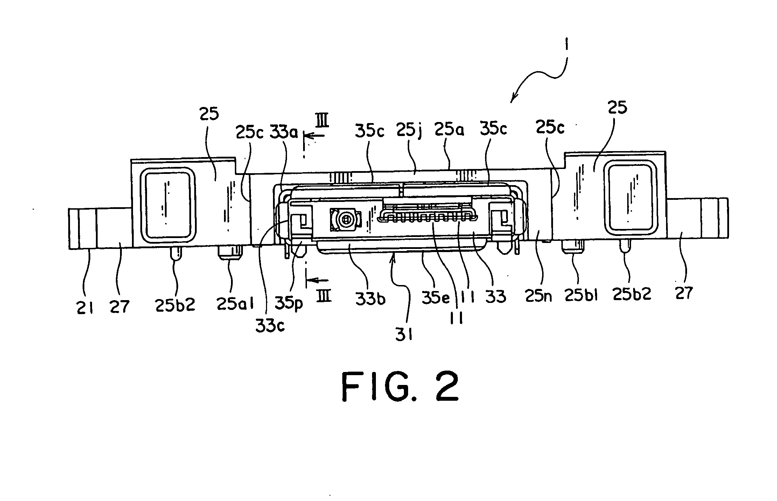

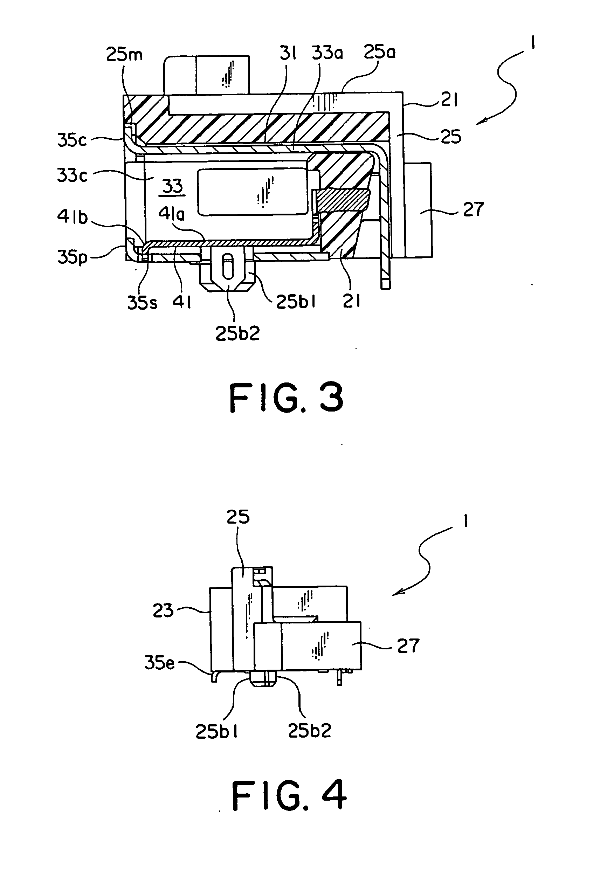

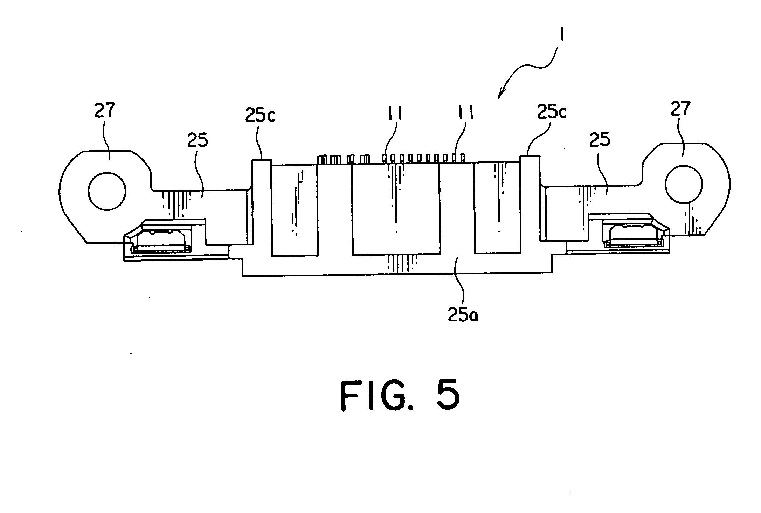

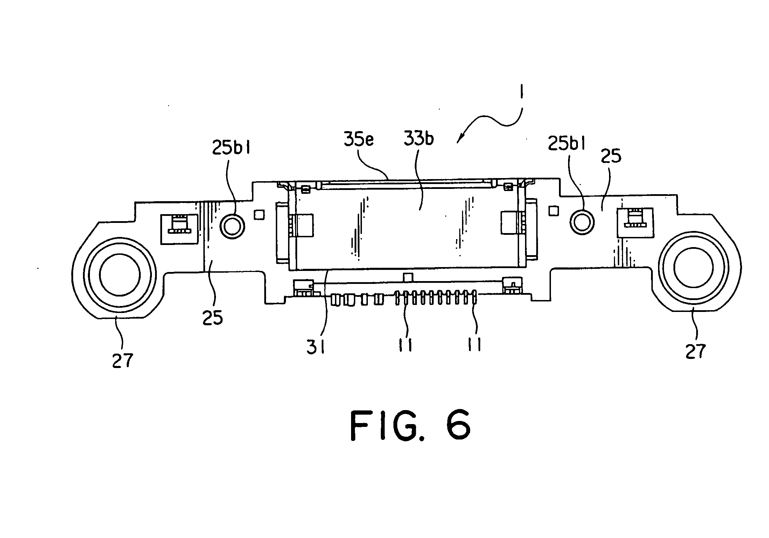

Referring to Figs. 1 to 6, description will be made of an electric connector according to a first embodiment of this invention.

In Figs. 1 to 6, the electric connector depicted by a reference numeral 1 comprises a plurality of conductive contacts 11, an insulating housing 21 holding the contacts 11, a conductive shell 31, and a pair of receiving portions 41 fixed to the housing 21. The housing 21 has a holding portion 23 holding the shell 31, a pair of block portions 25 extending from opposite sides of the holding portion 23 in a longitudinal direction of the electric connector 1, respectively, and a pair of fixing portions 27 extending from the block portions 25 in the longitudinal direction, respectively. When the electric connector 1 is mounted to a substrate such as a printed circuit board, the fixing portions 27 serve to fix the electric connector 1 to the substrate via fastening members such as bolts.

The holding portion 23 has a main plate portion 25a extending long in the longitudinal direction of the electric connector 1 and a pair of wall portions 25c connected to longitudinal opposite ends of the main plate portion 25a, respectively, and faced to each other. The shell 31 has a generally flat and tubular or hollow shell fitting portion 33 which is disposed in a space surrounded by the main plate portion 25a and the wall portions 25c and which is held by the housing 21. The shell fitting portion 33 has a first shell plate portion 33a faced to an inner surface of the main plate portion 25a, a second shell plate portion 33b faced to and spaced from the first shell plate portion 33a generally in parallel thereto, and a pair of shell side plate portions 33c connected to longitudinal opposite ends of the first and the second shell plate portions 33c.

The shell 31 has a first guide portion 35c bent from a fitting-side or front opening end of the first shell plate portion 33a to face a recess 25m formed on an end face 25j of the main plate portion 25a of the holding portion 23, a second guide portion 35e bent outward from a fitting-side opening end of the second shell plate portion 33b, and a pair of third guide portions 35f bent outward to face the wall portions 25c of the holding portion 23, respectively.

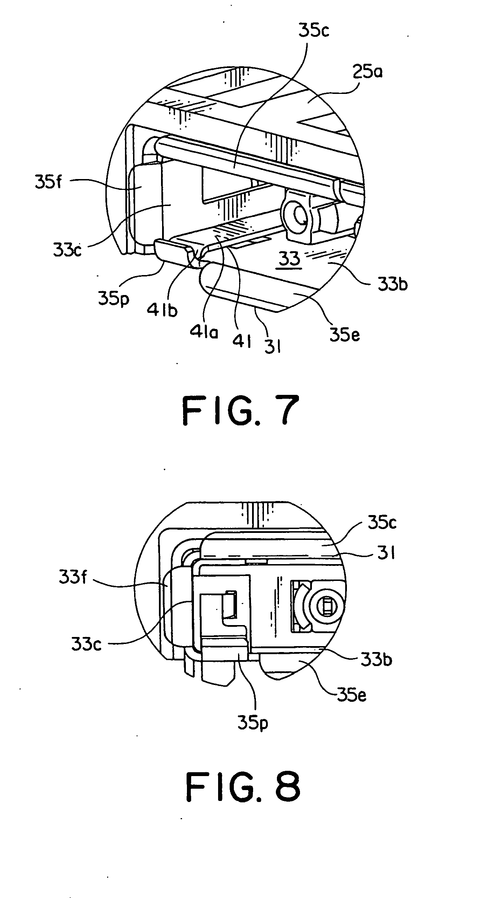

As shown in Figs. 7 and 8 also, the shell 31 further has a pair of bent portions 35p formed at a fitting-side end of the second shell plate portion 33b on longitudinal opposite sides of the second guide portion 35e and bent in a direction reverse to the second guide portion 35e.

Each of the receiving portions 41 is made of a metal material and has a band-like flat plate portion 41 a and a locking portion 41 b formed at a fitting-side end of the flat plate portion 41 a and slightly bent. The locking portion 41 b is engaged with a locking hole 35s formed on each of the bent portions 35p. The flat plate portion 41 a extends from the fitting-side end to a rear end which is press-fitted to the housing 21 to be fixed. Each of the receiving portions 41 may be made of a resin material.

Each of the block portions 25 has a pair of pin portions 25b1 and 25b2 formed on its bottom surface and extending outward therefrom to be inserted to a substrate (not shown). The shell fitting portion 33 of the shell 31 is fitted to a mating fitting portion of a mating connector (not shown). When the mating connector is fitted into the shell fitting portion 33, the receiving portions 41 serve as key plates for receiving a load by prying force.

In the electric connector 1, the prying force exerted when the electric connector 1 is fitted to the mating connector is received by the receiving portions 41. Therefore, it is possible to prevent the shell from being deformed by the prying force.

In addition, the shell fitting portion 33 is defined by the shell 31 and the receiving portions 41. This results in increasing mechanical strength of the shell fitting portion 33. Therefore, stable contact is established between the shell 31 and a mating shell of the mating connector.

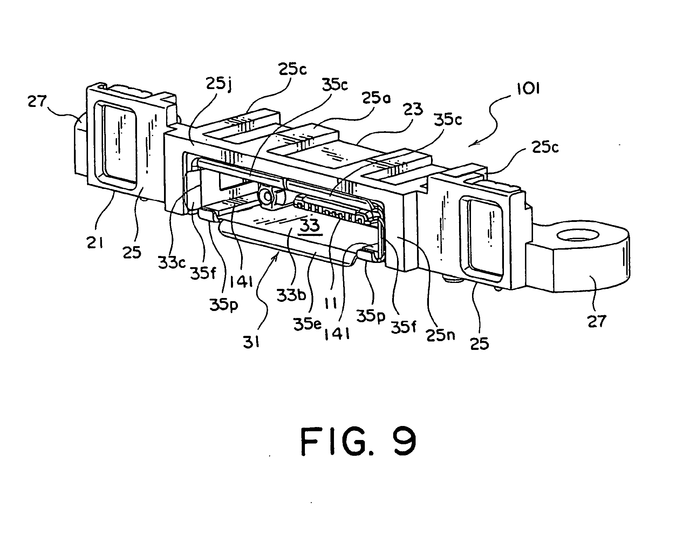

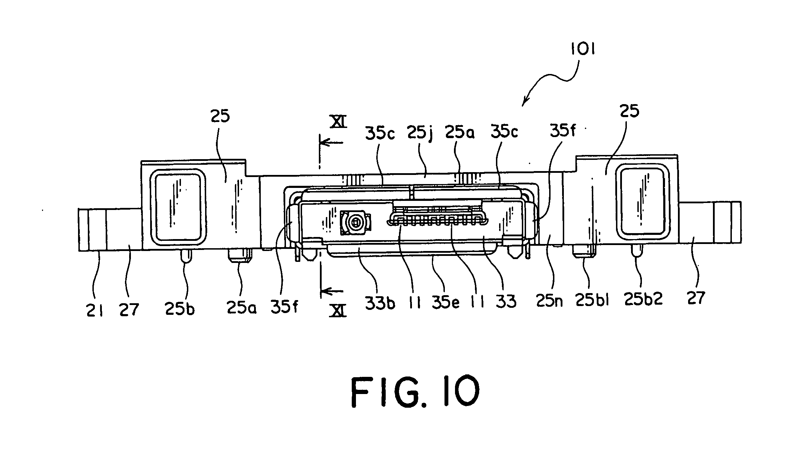

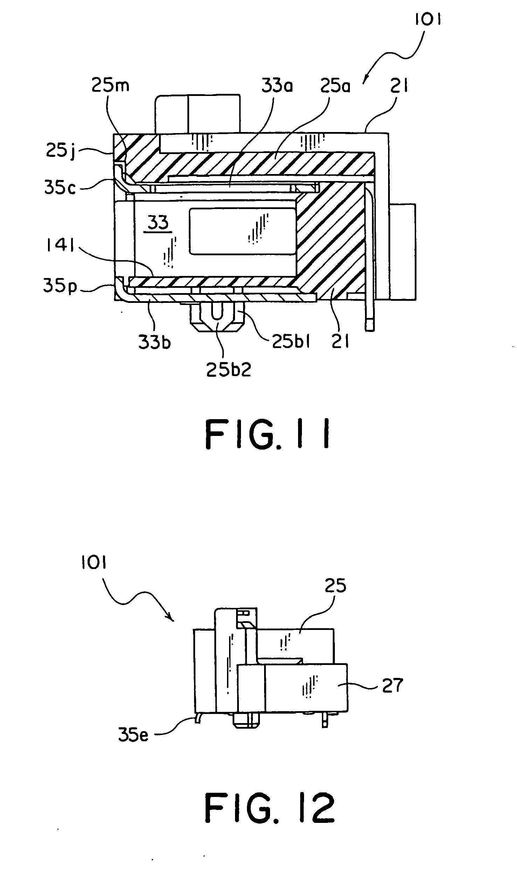

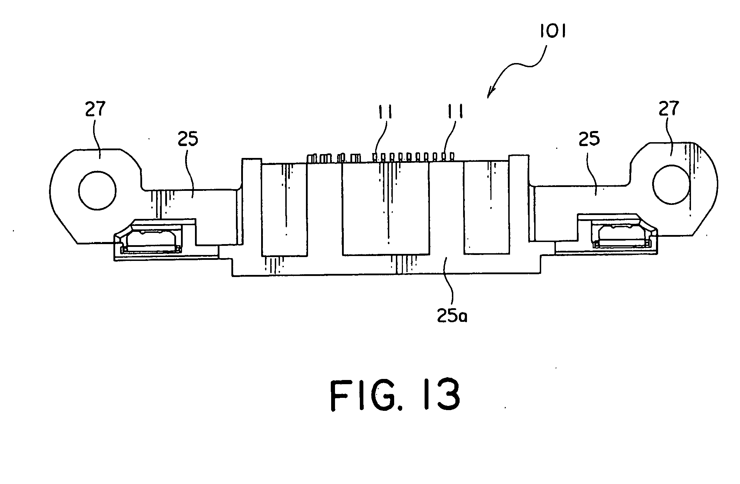

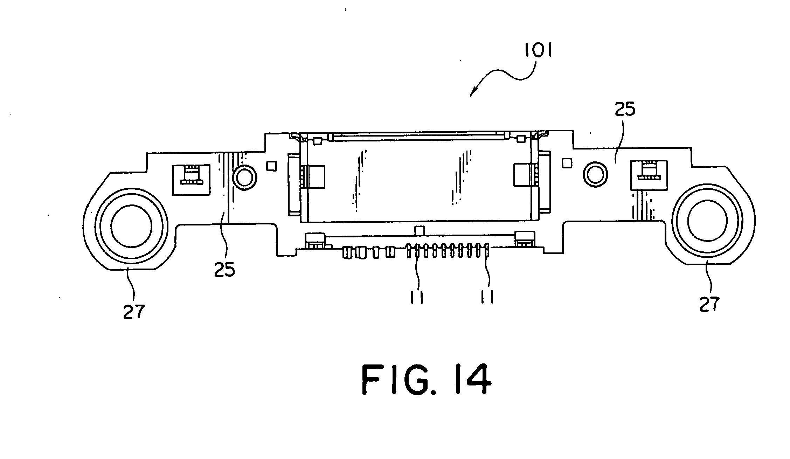

Referring to Figs. 9 to 14, description will be made of an electric connector according to a second embodiment of this invention. Similar parts similar to those of the first embodiment are designated by like reference numerals and description thereof will be omitted.

In Figs. 9 to 14, the electric connector depicted by a reference numeral 101 comprises a plurality of conductive contacts 11, an insulating housing 21 holding the contacts 11, a conductive shell 31, and a pair of receiving portions 141 integrally formed with the housing 21. The housing 21 has a holding portion 23 holding the shell 31, a pair of block portions 25 extending from opposite sides of the holding portion 23 in a longitudinal direction of the electric connector 1, respectively, and a pair of fixing portions 27 extending from the block portions 25 in the longitudinal direction, respectively.

The holding portion 23 has a main plate portion 25a extending long in the longitudinal direction of the electric connector 1 and a pair of wall portions 25c connected to longitudinal opposite ends of the main plate portion 25a, respectively, and faced to each other. The shell 31 has a generally flat and tubular or hollow shell fitting portion 33 which is disposed in a space surrounded by the main plate portion 25a and the wall portions 25c and which is held by the housing 21. The shell fitting portion 33 has a first shell plate portion 33a faced to an inner surface of the main plate portion 25a, a second shell plate portion 33b faced to and spaced from the first shell plate portion 33a generally in parallel thereto, and a pair of shell side plate portions 33c connected to longitudinal opposite ends of the first and the second shell plate portions 33c.

The shell 31 has a first guide portion 35c bent from a fitting-side or front opening end of the first shell plate portion 33a to face a recess 25m formed on an end face 25j of the main plate portion 25a of the holding portion 23, a second guide portion 35e bent outward from a fitting-side opening end of the second shell plate portion 33b, and a pair of third guide portions 35f bent outward to face the wall portions 25c of the holding portion 23, respectively.

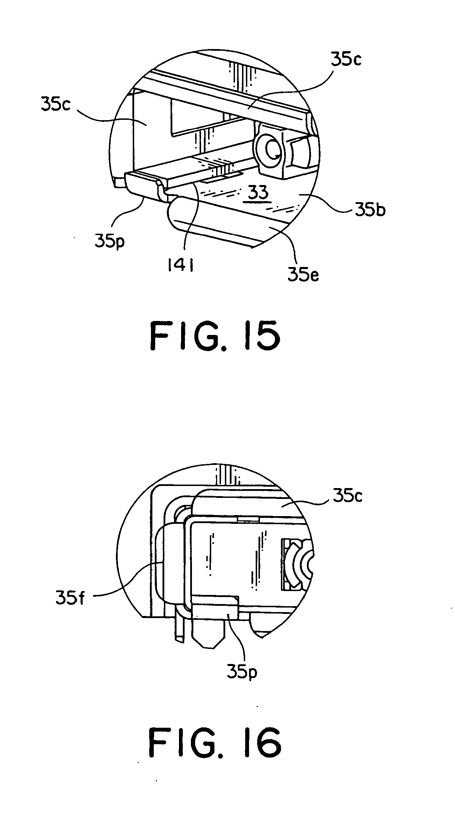

As shown in Figs. 15 and 16 also, each of the receiving portions 141 is made of a resin material and is integrally formed with the housing 21 by molding. The shell fitting portion 33 of the shell 31 is fitted to a mating fitting portion of a mating connector (not shown). When the mating connector is fitted into the shell fitting portion 33, the receiving portions 141 serve as key plates for receiving a load by prying force.

In the electric connector 101, the prying force exerted when the electric connector 101 is fitted to the mating connector is received by the receiving portions 141. Therefore, it is possible to prevent the shell from being deformed by the prying force.

In addition, the shell fitting portion 33 is defined by the shell 31 and the receiving portions 141. This results in increasing mechanical strength of the shell fitting portion 33. Therefore, stable contact is established between the shell 31 and a mating shell of the mating connector.

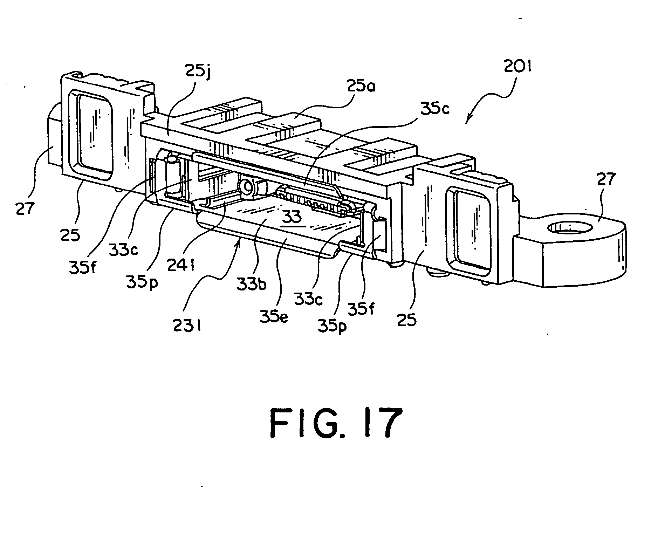

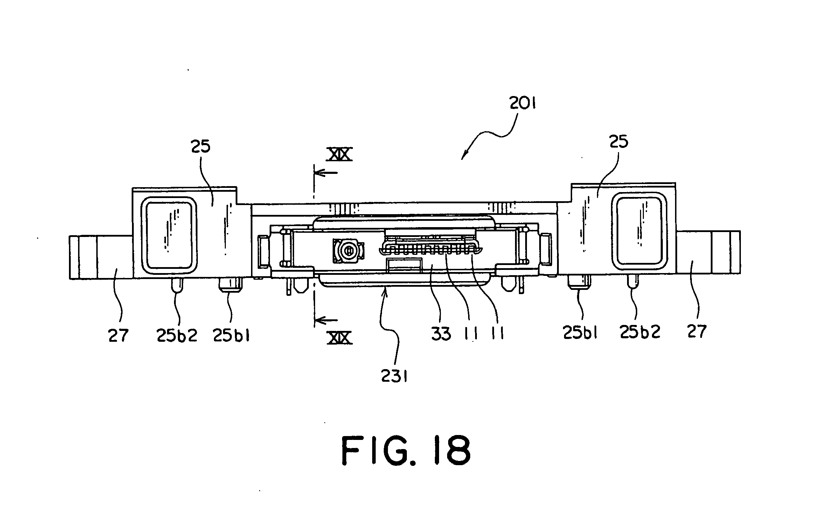

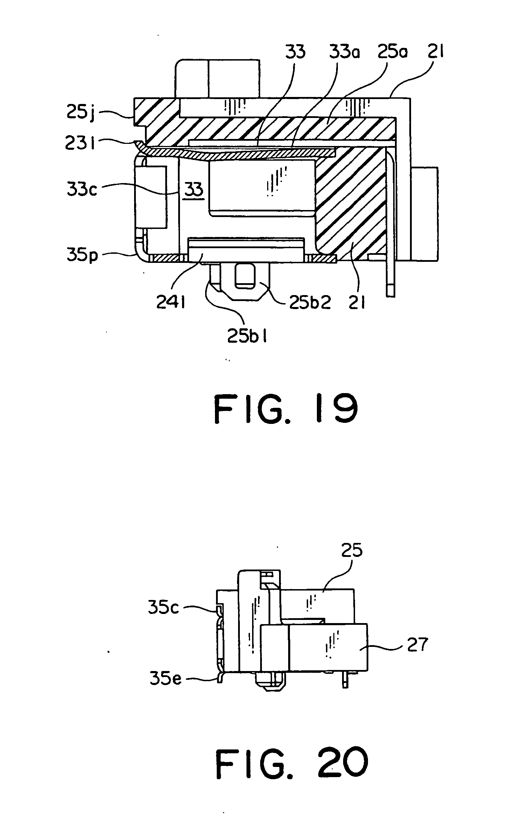

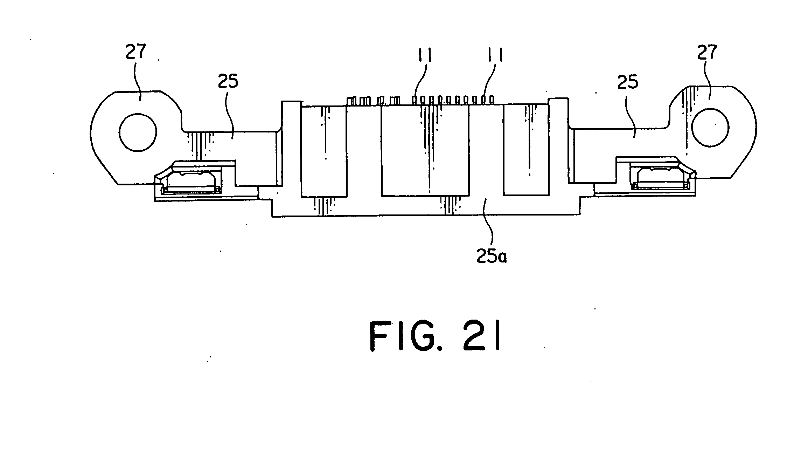

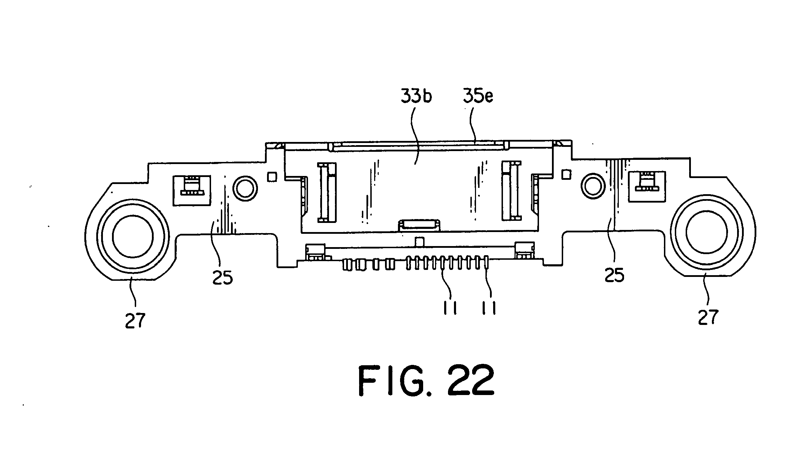

Referring to Figs. 17 to 22, description will be made of an electric connector according to a third embodiment of this invention. Similar parts similar to those of the first embodiment are designated by like reference numerals and description thereof will be omitted.

In Figs. 17 to 22, the electric connector is depicted by a reference numeral 201. A shell 231 has a generally flat and tubular or hollow shell fitting portion 33 which is disposed in a space surrounded by a main plate portion 25a and a pair of wall portions 25c of a holding portion 23 and which is held by a housing 21. The shell fitting portion 33 has a first shell plate portion 33a faced to an inner surface of the main plate portion 25a, a second shell plate portion 33b faced to and spaced from the first shell plate portion 33a generally in parallel thereto, and a pair of shell side plate portions 33c connected to longitudinal opposite ends of the first and the second shell plate portions 33c.

The shell 231 has a first guide portion 35c bent from a fitting-side or front opening end of the first shell plate portion 33a to face a recess 25m formed on an end face 25j of the main plate portion 25a of the holding portion 23, a second guide portion 35e bent outward from a fitting-side opening end of the second shell plate portion 33b, and a pair of third guide portions 35f bent outward to face the wall portions 25c of the holding portion 23, respectively.

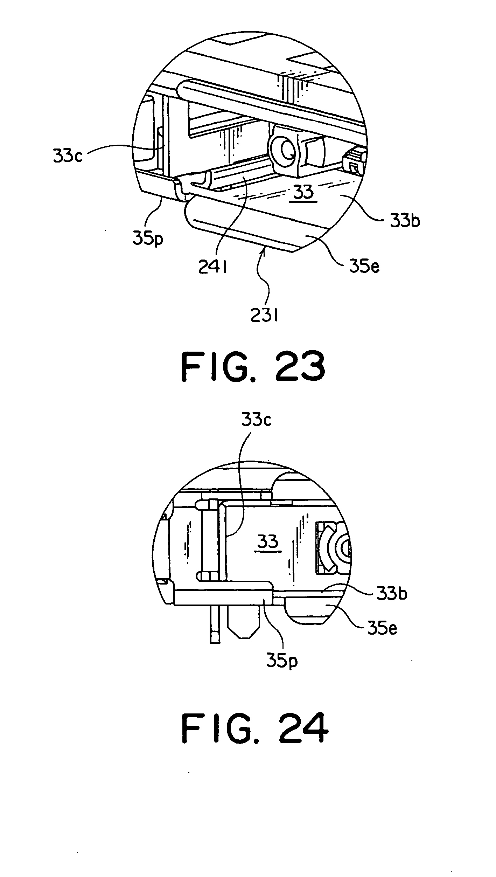

A pair of receiving portions 241 are made of a metal material same as that of the shell 31 and is integrally formed with the shell 23. As shown in Figs. 23 and 24 also, each of the receiving portions 241 is formed by cutting and raising a part of the second shell plate portion 33b into the shell fitting portion 33.

The shell fitting portion 33 of the shell 31 is fitted to a mating fitting portion of a mating connector (not shown). When the mating connector is fitted into the shell fitting portion 33, the receiving portions 241 serve as key plates for receiving a load by prying force.

In the electric connector 201, the prying force exerted when the electric connector 201 is fitted to the mating connector is received by the receiving portions 241. Therefore, it is possible to prevent the shell from being deformed by the prying force.

In addition, the shell fitting portion 33 is defined by the shell 231 and the receiving portions 241. This results in increasing mechanical strength of the shell fitting portion 33. Therefore, stable contact is established between the shell 231 and a mating shell of the mating connector.

Each of the above-mentioned electric connectors may be used as a connector for various apparatuses such as a mobile telephone terminal and a small-sized information terminal.

Although this invention has been described in conjunction with a few preferred embodiments thereof, this invention may be modified in various other manners. In the illustrated examples, the electric connector is provided with a plurality of contacts. However, it will readily be understood that the electric connector may be provided with only one contact.

## Claims

1. An electric connector (1, 101, 201) comprising:
a conductive shell fitting portion (33) to be fitted to a mating connector; and
a receiving portion (41, 141, 241) arranged within the shell fitting portion (33) to receive a load by plying force between the electric connector and the mating connector, **characterized in that** it further comprises:
a housing (21) coupled to the shell fitting portion (33); and
a conductive contact (11) held by the housing (21), the receiving portion (41, 141, 241) having a flat shape with its one end coupled to the housing (21) and the other end coupled to the shell fitting portion (33).

2. The electric connector according to claim 1, wherein the one end of the receiving portion (41, 141, 241) is fixed to the housing (21) and the other end of the receiving portion (41, 141, 241) is engaged with the shell fitting portion (33).

3. The electric connector according to claim 1 or 2, wherein the receiving portion (41, 141, 241) is integrally formed with the housing (21).

4. The electric connector according to claim 1 or 2, wherein the receiving portion (41, 141, 241) is integrally formed with the shell fitting portion (33).

5. The electric connector according to any one of claims 1 to 4, wherein the housing (21) has:
a holding portion (23) holding the shell fitting portion (33);
a block portion (25) extending from the holding portion (23); and
a fixing portion (27) extending from the block portion (25), the fixing portion (27) being a part to fix the electric connector.

6. The electric connector according to claim 5, wherein the holding portion (23) includes:
a main plate portion (25a); and
a pair of wall portions (25c) connected to the main plate portion (25a) and faced to each other, the shell fitting portion (33) being disposed in a space surrounded by the main plate portion (25a) and the wall portions (25c).

7. The electric connector according to claim 6, wherein the shell fitting portion (33) includes:
a first shell plate portion (33a) faced to the main plate portion (25a);
a second shell plate portion (33b) faced to and spaced from the first shell plate portion (33a) generally in parallel thereto; and
a pair of shell side plate portions (33c) connected to opposite ends of the first and the second shell plate portions (33a, 33b).

8. The electric connector according to claim 7, wherein the shell fitting portion (33) is formed as a part of a conductive shell (31), the shell (31) including:
a first guide portion (35c) extending from the first shell plate portion (33a);
a second guide portion (35e) extending from the second shell plate portion (33b); and
a third guide portion (35f) extending to face the wall portions (25c).

9. The electric connector according to claim 1, wherein the receiving portion (41, 141, 241), is made of a metal material.

10. The electric connector according to claim 1, wherein the receiving portion (41, 141, 241) is made of a resin material.

## Patentansprüche

1. Elektrischer Verbinder (1, 101, 201) mit:
einem leitenden Schaleneinführabschnitt (33), der in einen Gegenverbinder eingeführt werden soll, und
einem Aufnahmeabschnitt (41, 141, 241), der in dem Schaleneinführabschnitt (33) angeordnet ist, zum Aufnehmen einer Last durch eine Biegekraft zwischen dem elektrischen Verbinder und dem Gegenverbinder,
**dadurch gekennzeichnet, dass** er weiter enthält:
ein Gehäuse (21), das mit dem Schaleneinführabschnitt (33) verbunden ist, und
einen leitenden Kontakt (11), der von dem Gehäuse (21), gehalten wird,
wobei der Aufnahmeabschnitt (41, 141, 241) eine flache Form hat,
sein eines Ende mit dem Gehäuse (21) verbunden ist und
das andere Ende mit dem Schaleneinführabschnitt (33) verbunden ist.

2. Elektrischer Verbinder gemäß Anspruch 1, bei dem
das eine Ende des Aufnahmeabschnitts (41, 141, 241) an dem Gehäuse (21) befestigt ist und
das andere Ende des Aufnahmeabschnitts (41, 141, 241) mit dem Schaleneinführabschnitt (33) in Eingriff ist.

3. Elektrischer Verbinder gemäß Anspruch 1 oder 2, bei dem der Aufnahmeabschnitt (41, 141, 241) integral mit dem Gehäuse (21) gebildet ist.

4. Elektrischer Verbinder gemäß Anspruch 1 oder 2, bei dem der Aufnahmeabschnitt (41, 141, 241) integral mit dem Schaleneinführabschnitt (33) gebildet ist.

5. Elektrischer Verbinder gemäß einem der Ansprüche 1 bis 4, bei dem das Gehäuse (21) enthält:
einen Halteabschnitt (23), der den Schaleneinführabschnitt (33) hält,
einen Blockabschnitt (25), der sich von dem Halteabschnitt (23) aus erstreckt, und
einen Befestigungsabschnitt (27) der sich von dem Blockabschnitt (25) aus erstreckt,
wobei der Befestigungsabschnitt (27) ein Teil zum Befestigen des elektrischen Verbinders ist.

6. Elektrischer Verbinder gemäß Anspruch 5, bei dem der Halteabschnitt (23) enthält:
einen Hauptplattenabschnitt (25a) und
ein Paar von Wandabschnitten (25c), die mit dem Hauptplattenabschnitt (25a) verbunden und einander zugewandt sind,
wobei der Schaleneinführabschnitt (33) in einem Raum angeordnet ist, der von dem Hauptplattenabschnitt (25a) und den Wandabschnitten (25c) umgeben ist.

7. Elektrischer Verbinder gemäß Anspruch 6, bei dem der Schaleneinführabschnitt (33) enthält:
einen ersten Schalenplattenabschnitt (33a), der dem Hauptplattenabschnitt (25a) zugewandt ist,
einen zweiten Schalenplattenabschnitt (33b), der dem ersten Schalenplattenabschnitt (33a) zugewandt und von ihm beabstandet ist allgemein parallel zu diesem, und
einem Paar von Schalenseitenplattenabschnitten (33c), die mit entgegengesetzten Enden des ersten und des zweiten Schalenplattenabschnitts (33a, 33b) verbunden sind.

8. Elektrischer Verbinder gemäß Anspruch 7, bei dem der Schaleneinführabschnitt (33) als Teil einer leitenden Schale (31) gebildet ist, wobei die Schale (31) enthält:
einen ersten Führabschnitt (35c), der sich von dem ersten Schalenplattenabschnitt (33a) aus erstreckt,
einen zweiten Führabschnitt (35e), der sich von dem zweiten Schalenplattenabschnitt (33b) aus erstreckt, und
einen dritten Führabschnitt (35f), der sich so erstreckt, dass er den Wandabschnitten (25c) zugewandt ist.

9. Elektrischer Verbinder gemäß Anspruch 1, bei dem der Aufnahmeabschnitt (41, 141, 241) aus einem Metallmaterial gebildet ist.

10. Elektrischer Verbinder gemäß Anspruch 1, bei dem der Aufnahmeabschnitt (41, 141, 241) aus einem Harzmaterial gebildet ist.

## Revendications

1. Connecteur électrique (1, 101, 201) comprenant :
une partie de montage en forme de coque (33) destinée à être assemblée à un connecteur d'accouplement,
une partie de réception (41, 141, 241) montée à la partie interne de la partie de montage en forme de coque (33) pour recevoir une charge en exerçant une force entre le connecteur électrique et le connecteur d'accouplement,
**caractérisé en ce qu'**
il comporte en outre :
un boitier (21) accouplé à la partie de montage en forme de coque (33), et
un contact conducteur (11) maintenu par le boitier (21), la partie de réception (41, 141, 241) ayant une forme plate dont une première extrémité est accouplée au boitier (21) tandis que la seconde extrémité est accouplée à la partie de montage en forme de coque (33).

2. Connecteur électrique conforme à la revendication 1, dans lequel la première extrémité de la partie de réception (41, 141, 241) est fixée au boitier (21) tandis que la seconde extrémité de la partie de réception (41, 141, 241) vient en prise avec la partie de montage en forme de coque (33).

3. Connecteur électrique conforme à la revendication 1 ou 2, dans lequel la partie de réception (41, 141, 241) est formée intégralement avec le boitier (21).

4. Connecteur électrique conforme à la revendication 1 ou 2, dans lequel la partie de réception (41, 141, 241) est formée intégralement avec la partie de montage en forme de coque (33).

5. Connecteur électrique conforme à l'une quelconque des revendications 1 à 4, dans lequel le boitier (21) comporte :
une partie support (23) maintenant la partie de montage en forme de coque (33),
une partie de blocage (25) s'étendant à partir de la partie support (23), et
une partie de fixation (27) s'étendant à partir de la partie de blocage (25), cette partie de fixation (27) étant une partie permettant la fixation du connecteur électrique.

6. Connecteur électrique conforme à la revendication 5, dans lequel la partie support (23) comporte :
une partie principale en forme de plaque (25a), et
une paire de parties de paroi (25c) reliées à la partie en forme de plaque principale (25a) et respectivement situées en regard, la partie de montage en forme de coque (33) étant montée dans un espace entouré par la partie principale en forme de plaque (25a) et les parties de paroi (25c).

7. Connecteur électrique conforme à la revendication 6, dans lequel la partie de montage en forme de coque (33) comporte :
une première partie de coque en forme de plaque (33a) faisant face à la partie principale en forme de plaque (25a),
une seconde partie de coque en forme de plaque (33b) faisant face et située à distance de la première partie de coque en forme de plaque (33a), essentiellement parallèlement à celle-ci, et
une paire de parties de coque latérales en forme de plaque (33c) reliée aux extrémités opposées de la première et de la seconde partie de coque en forme de plaque (33a, 33b).

8. Connecteur électrique conforme à la revendication 7, dans lequel la partie de montage en forme de coque (33) est formée en tant que partie d'une coque conductrice (31), cette coque (31) comportant :
une première partie de guidage (35c) s'étendant à partir de la première partie de coque en forme de plaque (33a),
une seconde partie de guidage (35e) s'étendant à partir de la seconde partie de coque en forme de plaque (33b), et
une troisième partie de guidage (35f) s'étendant de façon à être en regard des parties de paroi (25c).

9. Connecteur électrique conforme à la revendication 1, dans lequel la partie de réception (41, 141, 241) est réalisée en un matériau métallique.

10. Connecteur électrique conforme à la revendication 1, dans lequel la partie de réception (41, 141, 241) est réalisée en une résine.
